# EUROPÄISCHE PATENTSCHRIFT

(11) **EP 4 507 985 B1**
(45) Veröffentlichungstag und Bekanntmachung des Hinweises auf die Patenterteilung: **18.03.2026**
(21) Anmeldenummer: 23703123.2
(22) Anmeldetag: 31.01.2023
(51) Int. Cl.: B65G 1/04, B65G 1/14

(54) **LAGERSYSTEM UND VERFAHREN ZUR LAGERUNG VON OBJEKTEN IN EINEM DERARTIGEN LAGERSYSTEM**
STORAGE SYSTEM AND METHOD FOR STORING OBJECTS IN SUCH A STORAGE SYSTEM
SYSTÈME D'ENTREPOSAGE ET PROCÉDÉ D'ENTREPOSAGE D'OBJETS DANS UN TEL SYSTÈME D'ENTREPOSAGE

(30) Priorität: 13.04.2022 AT 502412022
(43) Veröffentlichungstag der Anmeldung: 19.02.2025
(73) Patentinhaber: Knapp AG, 8075 Hart bei Graz (AT)
(72) Erfinder: PUNTIGAM, Wolfgang, 8075 Hart bei Graz (AT); MATHI, Franz, 8075 Hart bei Graz (AT); GÜTL, Bernhard, 8075 Hart bei Graz (AT); WAUKMANN, Wilfried, 8075 Hart bei Graz (AT)
(74) Vertreter: Schwarz & Partner Patentanwälte GmbH
(86) Internationale Anmeldenummer: PCT/AT2023/060020
(87) Internationale Veröffentlichungsnummer: WO 2023/197018

(56) Entgegenhaltungen:
- EP-A1- 0 602 399
- EP-A1- 2 138 427
- CN-A- 112 811 057
- DE-A1- 3 106 137
- DE-B3- 102020 117 835

## Beschreibung

Die Erfindung betrifft ein Lagersystem gemäß dem Gegenstand von Anspruch 1, und ein Verfahren zur Lagerung von Objekten in einem derartigen Lagersystem mit den Schritten gemäß Anspruch 6.

Auf dem technischen Gebiet der Lagerlogistik sind automatisierte Lagersysteme bekannt, in welchen verschiedenste Objekte gelagert werden können. Derartige automatisierte Lagersysteme ermöglichen eine zumindest teilautomatisierte Einlagerung und Auslagerung der Objekte in ein Lagervolumen des Lagersystems gemäß Einlagerungs- und Auslagerungsaufträgen.

In automatisierten Lagersystemen werden üblicherweise Lagerbedienfahrzeuge eingesetzt, welche je nach Anwendung auch Regalbediengeräte, Ebenenbediengeräte oder Shuttles genannt werden. Einzulagernde Objekte werden hierbei teilweise direkt oder auch unter Zuhilfenahme von Lagerhilfsmitteln in das Lagervolumen eingebracht. Da die Fahrwege der Shuttles oder Regalbediengeräte jedoch viel Platz beanspruchen, ist die Nutzung des zur Verfügung stehenden Raumes in einem Lagersystem nicht optimal. Des Weiteren weist herkömmlicherweise jeder Lagerplatz von Lagersystemen gemäß dem Stande der Technik ein fixes Volumen auf, welches unabhängig vom Volumen des eingelagerten Objekts ist. Kleine Objekte werden in der Regel in einer größeren Menge in einzelnen Behältern gelagert, um so eine Vielzahl von Objekten auf einem gemeinsamen Lagerplatz zu lagern. Hierzu sind im Stand der Technik Behälter bekannt, in denen mehrere gleiche Objekte gelagert sind, wie beispielsweise Behälter mit Unterteilungen, um einzelne Slots für unterschiedliche Objekte zu generieren oder Mischbehälter, in denen verschiedene Objekte gelagert sind. Dies erschwert jedoch die Lagerlogistik und führt zu Verzögerungen in der Handhabung der Objekte durch das Lagersystem, das diese Objekte nur gemeinsam ausgelagert und eingelagert werden können.

Des Weiteren sind sogenannte automatisierte Gridlager bekannt, welche eine höhere Volumsnutzung durch Vermeidung von Fahrgassen für die Lagerbedienfahrzeuge erreichen. Hierbei wird ein Gitter durch horizontale Längs- und Querfahrschienen bereitgestellt. Jeweils an den Kreuzungspunkten der Längs- und Querfahrschienen wird das Gitter durch vertikale Stützen getragen. Durch jeweils zwei Längsfahrscheinen und zwei Querfahrschienen, sowie den Regalstützen entsteht ein vertikaler Lagerschacht, in welchem jeweils übereinander gestapelte Behälter zur Lagerung der Artikel vorgesehen sind. Mittels orthogonal beweglicher Roboter kann auf den obersten Behälter der Stapel zugegriffen werden, oder dieser Behälter mit dem Roboter umgelagert bzw. aus dem Gridlager ausgelagert werden. Auch hier wird das Volumen eines Lagerplatzes wieder durch das Volumen jedes der Behälter definiert. Wenn nun in einem Behälter nur ein kleiner Artikel gelagert wird, wird das zur Aufnahme des Artikels bereitgestellte Volumen des Behälters wiederum nicht optimal ausgenutzt, und es entstehen Toträume. Weiters hat sich als nachteilig erwiesen, dass die gesamte Last eines Behälterstapels auf dem zuunterst stehenden Behälter lastet. Die Behälter müssen demzufolge statisch so dimensioniert werden, dass sie dieser hohen Last standhalten. Derart dimensionierte Behälter sind in der Herstellung kostspielig. Zusätzlich ist auch anzuführen, dass die eng aneinander und übereinander gelagerten Behälter sich im Brandfall negativ auswirken, da Löschmaßnahmen nicht effektiv zu einem Brandherd vordringen können.

Die Dokumente EP 0 602 399 A1, DE 31 06 137 A1, EP 2 138 427 A1 und DE 10 2020 117835 B3 beschreiben bekannte Lagersysteme.

Aufgabe der Erfindung ist es die oben genannten Nachteile des Standes der Technik zu beheben, und ein kosteneffizientes Lagersystem und Verfahren zur Lagerung von Objekten bereitzustellen, welches eine Lagerung von Objekten unter effizienter Raumnutzung ermöglicht.

Diese wird durch die Bereitstellung eines Lagersystem mit den Merkmalen von Anspruch 1 und eines Verfahrens zur Lagerung von Objekten mit den Merkmalen von Anspruch 6 gelöst.

Das erfindungsgemäße Lagersystem umfasst zumindest ein Regal mit mehreren auf einem Untergrund aufgestellten, im Wesentlichen vertikal verlaufenden Regalstützen. Des Weiteren umfasst das Lagersystem zumindest ein Lagerbedienfahrzeug und zumindest zwei Lagerhilfsmittel, sowie eine, an einem oberen Ende des Regals angeordnete Bedienebene, und ein unterhalb der Bedienebene angeordnetes Lagervolumen. Das Lagerbedienfahrzeug ist in der Bedienebene verfahrbar angeordnet und dazu ausgebildet, die Lagerhilfsmittel in das Lagervolumen einzubringen und aus diesem auszubringen.

Jedes der Lagerhilfsmittel weist Eingriffsmittel auf, und die Regalstützen weisen im Lagervolumen angeordnete Aufnahmemittel auf. Die Eingriffsmittel sind zwischen einem Sperrzustand, in welchem die Eingriffsmittel in zumindest manchen der Aufnahmemittel im Wesentlichen fixiert sind, und das jeweilige Lagerhilfsmittel in einer Lagerposition im Lagervolumen halten, und einem Freigabezustand, in welchem die Eingriffsmittel von den Aufnahmemitteln gelöst sind, verlagerbar. Das Lagerbedienfahrzeug ist dazu ausgebildet, ausgehend von der Bedienebene die Eingriffsmittel zwischen dem Sperrzustand und dem Freigabezustand zu verlagern. Des Weiteren kann durch die Verlagerung zwischen dem Freigabezustand und dem Sperrzustand der Eingriffsmittel das Lagerhilfsmittel in verschiedenen Lagerpositionen innerhalb des Lagervolumens positioniert oder fixiert werden, wodurch ein Abstand zwischen zwei in einem Regal vertikal aufeinanderfolgenden Lagerhilfsmitteln an den Platzbedarf des jeweiligen auf dem Lagerhilfsmittel gelagerten Objekts angepasst werden kann. Hierdurch wird die Raumausnutzung innerhalb des Lagersystems wesentlich verbessert.

Erfindungsgemäß umfasst das Lagerbedienfahrzeug ein Lastaufnahmemittel, welches im Wesentlichen vertikal in dem Lagervolumen verfahrbar, und mit einem der Lagerhilfsmittel zum Einbringen und zum Ausbringen des Lagerhilfsmittels aus dem Lagervolumen koppelbar ist. Hierdurch wird der Vorteil erreicht, dass das Lagerbedienfahrzeug nicht selbst in das Lagervolumen eingebracht werden muss, um ein Lagerhilfsmittel in einer Lagerposition zu fixieren oder aus dieser zu lösen.

Das Lastaufnahmemittel ist erfindungsgemäß dazu ausgebildet, die Eingriffsmittel, im Zuge der Koppelung mit dem Lagerhilfsmittel, von dem Sperrzustand in den Freigabezustand zu verlagern und/oder im Zuge der Entkoppelung von dem Lagerhilfsmittel von dem Freigabezustand in den Sperrzustand zu verlagern. Hierdurch wird der Vorteil erreicht, dass kein gesondertes Mittel notwendig ist, um die Eingriffsmittel zwischen dem Sperrzustand und dem Freigabezustand zu verlagern, und das Fixieren beziehungsweise Lösen des Lagerhilfsmittels in bzw. aus der Lagerposition gleichzeitig mit der Verbindung oder dem Lösen von dem Lastaufnahmemittel erfolgt.

Die Aufnahmemittel sind vorzugsweise als in den Regalstützen vorgesehene Ausnehmungen, Vertiefungen oder Sicken ausgeführt. Hierdurch wird der Vorteil erreicht, dass die Aufnahmemittel einfach und kostengünstig herzustellen sind.

Die Eingriffsmittel sind vorzugsweise als Haken, Bolzen oder an einer Welle angeordnete Segmentscheiben ausgeführt. Zudem sind sie vorzugsweise mittels einer Feder in dem Sperrzustand und/oder dem Freigabezustand vorgespannt. Hierdurch wird der Vorteil erreicht, dass mittels einer einfachen Bewegung eine Verlagerung zwischen dem Sperrzustand und dem Freigabezustand ermöglicht wird. Zudem kann durch eine Vorspannung in dem Freigabezustand ein irrtümliches Sperren beziehungsweise durch eine Vorspannung in den Sperrzustand ein irrtümliches Freigeben der Eingriffsmittel verhindert werden. Vorzugsweise greifen die Eingriffsmittel eines der Lagerhilfsmittel im Sperrzustand in, in einer Ebene gegenüberliegende Aufnahmemittel mehrerer Regalstützen ein.

Die Lagerhilfsmittel sind zudem vorzugsweise stapelbar. Hierdurch wird der Vorteil erreicht, dass die Lagerhilfsmittel platzsparend gelagert werden können. Des Weiteren können die Lagerhilfsmittel durch ihre Stapelbarkeit platzsparend direkt in dem Lagersystem gelagert werden. Hierbei werden die Eingriffsmittel eines untersten Lagerhilfsmittels in den Sperrzustand versetzt, wodurch dieses in einer Lagerposition gehalten wird. Anschließend werden weitere Lagerhilfsmittel auf dieses unterste Lagerhilfsmittel gelegt beziehungsweise gestapelt, wobei die Eingriffsmittel von diesen weiteren Lagerhilfsmitteln in dem Freigabezustand verbleiben. Bei einer Entnahme der gestapelten Lagerhilfsmittel werden diese der Reihe nach von oben aus dem Stapel entnommen.

Das erfindungsgemäße Verfahren zur Lagerung von Objekten in dem erfindungsgemäßen Lagersystem umfasst die Schritte:
- Ermitteln einer ersten Lagerhöhe eines in dem Lagersystem einzulagernden ersten Objekts;
- Einbringen oder Aufbringen des ersten Objekts in oder auf ein erstes Lagerhilfsmittel ausgewählt aus den Lagerhilfsmitteln des Lagersystems;
- Verbinden des ersten Lagerhilfsmittels mit dem Lagerbedienfahrzeug;
- Einbringen des ersten Lagerhilfsmittels in eine erste Lagerposition in dem Lagervolumen durch das Lagerbedienfahrzeug, während sich die Eingriffsmittel des ersten Lagerhilfsmittels in dem Freigabezustand befinden;
- Verlagern der Eingriffsmittel des ersten Lagerhilfsmittels von dem Freigabezustand in den Sperrzustand, um das erste Lagerhilfsmittel in der ersten Lagerposition im Zuge des Abkoppelns des ersten Lagerhilfsmittels von dem Lagerbedienfahrzeug zu fixieren;
- Verbinden eines zweiten Lagerhilfsmittels ausgewählt aus den Lagerhilfsmitteln des Lagersystems mit dem Lagerbedienfahrzeug;
- Einbringen des zweiten Lagerhilfsmittels in eine zweite Lagerposition in dem Lagervolumen durch das Lagerbedienfahrzeug, während sich die Eingriffsmittel des Lagerhilfsmittels in dem Freigabezustand befinden, wobei sich die zweite Lagerposition in einem vertikalen Abstand von zumindest der ersten Lagerhöhe über der ersten Lagerposition befindet;
- Verlagern der Eingriffsmittel des zweiten Lagerhilfsmittels von dem Freigabezustand in den Sperrzustand, um das zweite Lagerhilfsmittel in der zweiten Lagerposition im Zuge des Abkoppelns des zweiten Lagerhilfsmittels von dem Lagerbedienfahrzeug zu fixieren.

Die Ermittlung der ersten Lagerhöhe des ersten Objekts, sowie die Wahl der zweiten Lagerposition in einem vertikalen Abstand von zumindest der ersten Lagerhöhe über der ersten Lagerposition erlaubt die Variation des Abstandes der ersten Lagerposition von der zweiten Lagerposition anhand des Platzbedarfs des einzulagernden Objekts in der ersten Lagerposition.

Gemäß der bevorzugten Ausführungsform des erfindungsgemäßen Verfahrens wird in dem vertikalen Abstand zwischen der ersten Lagerposition und der zweiten Lagerposition ein Platzbedarf eines Feuerlösch- oder Feuerunterdrückungsmittels berücksichtigt. Hierdurch wird es ermöglicht automatisch den Platzbedarf für unterschiedliche Feuerlösch- oder Feuerunterdrückungsmittel zwischen den Lagerpositionen zu berücksichtigen, um im Brandfall eine ausreichende Versorgung mit Feuerlöschmittel und eine ausreichende Verteilung des Feuerlöschmittels im Lagersystem zu gewährleisten.

Das Verlagern zumindest eines der Eingriffsmittel der Lagerhilfsmittel des Lagersystems zwischen dem Sperrzustand und dem Freigabezustand erfolgt vorzugsweise durch Verdrehen der Eingriffsmittel in einer im Wesentlichen entlang eines Verlaufs der Regalstützen angeordneten Drehachse. Hierdurch wird der Vorteil erreicht, dass das Verlagern zwischen dem Freigabezustand und dem Sperrzustand auf mechanisch einfache Weise ausgehend von der Bedienebene erfolgen kann.

Vorzugsweise erfolgt das Verlagern zumindest eines der Eingriffsmittel der Lagerhilfsmittel des Lagersystems von dem Sperrzustand in den Freigabezustand durch ein Anheben des Lagerhilfsmittels aus der ersten Lagerposition oder der zweiten Lagerposition. Dies vereinfacht das Prozedere beim Auslagern des jeweiligen Lagerhilfsmittels aus der Lagerposition, da kein gesonderter Verfahrensschritt für die Verlagerung der Eingriffsmittel von dem Sperrzustand in den Freigabezustand notwendig ist.

Das erste Objekt kann ein Lagerhilfsmittel, ein Stapel aus Lagerhilfsmitteln oder ein Artikel sein. Hierdurch wird es ermöglicht, auch Lagerhilfsmittel in dem Lagersystem zu lagern, und bei Bedarf wieder auszulagern. Hierdurch wird der Platzbedarf für die Bereithaltung von Lagerhilfsmitteln stark reduziert.

Vorzugsweise umfasst das erfindungsgemäße Verfahren die zusätzlichen Schritte:
- Ermitteln einer zweiten Lagerhöhe eines in dem Lagersystem einzulagernden zweiten Objekts;
- Einbringen oder Aufbringen des zweiten Objekts in oder auf das zweite Lagerhilfsmittel.

Hierdurch wir ein weiteres einzulagerndes, zweites Objekt in dem Lagersystem eingelagert, und dessen zweite Lagerhöhe erfasst. Dies ermöglicht die Berücksichtig des Platzbedarfs jedes in dem Lagersystem eingelagerten Objekts.

Das erfindungsgemäße Lagersystem, sowie das erfindungsgemäße Verfahren zur Lagerung von Objekten in einem Lagersystem werden in weiterer Folge anhand der Figuren näher erläutert.
Figur 1 zeigt ein erfindungsgemäßes Lagersystem mit mehreren auf Lagerhilfsmitteln eingelagerten Objekten unterschiedlicher Abmessungen.
Figur 2 zeigt das erfindungsgemäße Lagersystem gemäß Figur 1 mit einem Stapel an zusätzlich eingelagerten Lagerhilfsmitteln.
Figur 3a zeigt ein Lagerhilfsmittel des erfindungsgemäßen Lagersystems mit Eingriffsmitteln, welche sich in einem Sperrzustand befinden.
Figur 3b zeigt ein Eingriffsmittel des Lagerhilfsmittels gemäß Figur 3a im Detail.
Figur 3c zeigt das Lagerhilfsmittel aus Figur 3a in einer Draufsicht.
Figur 3d zeigt ein Eingriffsmittel des Lagerhilfsmittels gemäß Figur 3a, welches in ein Aufnahmemittel einer Regalstützen des Lagersystems eingreift.
Figur 4a zeigt ein Lagerhilfsmittel des erfindungsgemäßen Lagersystems mit Eingriffsmitteln, welche sich in einem Freigabezustand befinden.
Figur 4b zeigt ein Eingriffsmittel des Lagerhilfsmittels gemäß Figur 4a im Detail.
Figur 4c zeigt das Lagerhilfsmittel aus Figur 4a in einer Draufsicht.
Figur 4d zeigt ein Eingriffsmittel des Lagerhilfsmittels gemäß Figur 4a, welches aus einem Aufnahmemittel einer Regalstütze des Lagersystems gelöst ist.
Figur 5 zeigt ein Lagerhilfsmittel des erfindungsgemäßen Lagersystems in einer alternativen Ausführungsvariante in einer teilweisen Schnittdarstellung und in einer Außenansicht.
Figur 6a zeigt ein Lastaufnahmemittel des erfindungsgemäßen Lagersystems vor einer Koppelung mit einem Lagerhilfsmittel.
Figur 6b zeigt das Lastaufnahmemittel gemäß Figur 6a in einem mit dem Lagerhilfsmittel gekoppelten Zustand
Figur 6c zeigt das Lastaufnahmemittel gemäß Figur 6b, wobei zusätzlich ein Objekt gezeigt ist, welches von dem Lastaufnahmemittel aufgenommen ist.

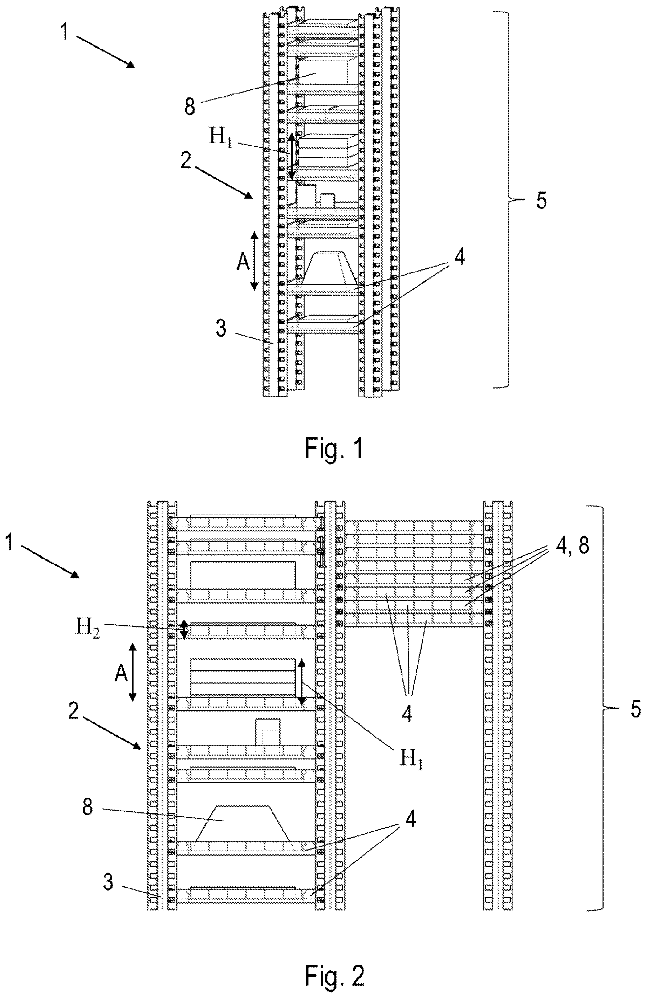

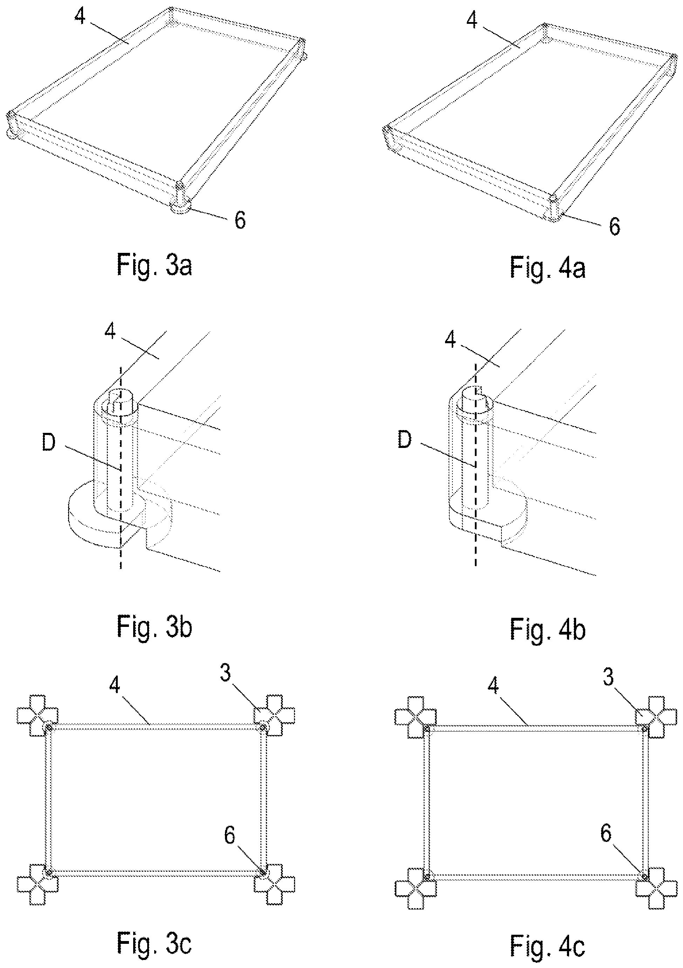

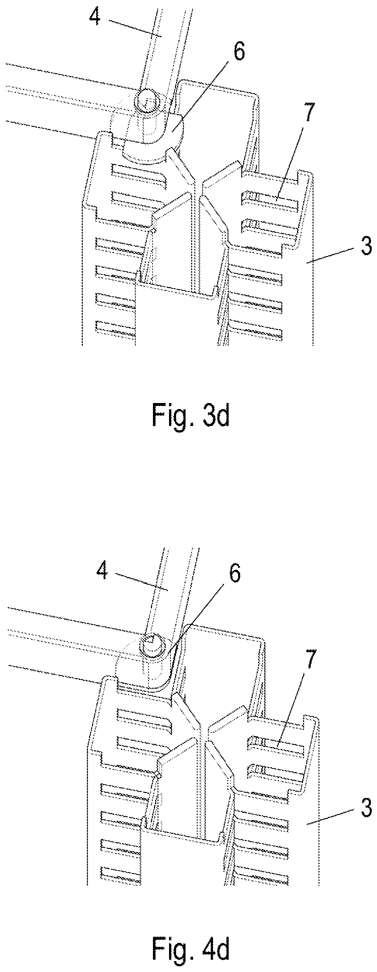

Das erfindungsgemäße Lagersystem 1 ist in Figur 1 und Figur 2 abschnittsweise in einer Außenansicht gezeigt. Das Lagersystem 1 umfasst zumindest ein Regal 2 mit mehreren auf einem Untergrund aufgestellten, im Wesentlichen, beziehungsweise zumindest abschnittsweise vertikal verlaufenden Regalstützen 3. Zudem umfasst das Lagersystem 1 zumindest ein Lagerbedienfahrzeug, welches in den Figuren nicht dargestellt ist, und zumindest zwei Lagerhilfsmittel 4. Des Weiteren umfasst das Lagersystem 1 eine, an einem oberen Ende des Regals 2 angeordnete Bedienebene, und ein unterhalb der Bedienebene angeordnetes Lagervolumen 5. Das Lagerbedienfahrzeug ist in der Bedienebene verfahrbar angeordnet und dazu ausgebildet ist, die Lagerhilfsmittel 4 in das Lagervolumen 5 einzubringen und aus diesem auszubringen. Erfindungsgemäß weist jedes der Lagerhilfsmittel 4 Eingriffsmittel 6 auf, und die Regalstützen 3 weisen im Lagervolumen 5 angeordnete Aufnahmemittel 7 auf. Die Eingriffsmittel 6 sind beispielsweise in den Figuren 3b und 4b im Detail dargestellt wobei die Figuren 3d und 4d zudem die Aufnahmemittel 7 zeigen. Die Eingriffsmittel 6 sind zwischen einem Sperrzustand, in welchem die Eingriffsmittel in zumindest manchen der Aufnahmemittel 7 im Wesentlichen fixiert sind, und das jeweilige Lagerhilfsmittel 4 in einer Lagerposition im Lagervolumen 5 halten, und einem Freigabezustand, in welchem die Eingriffsmittel 6 von den Aufnahmemitteln 7 gelöst sind, verlagerbar. Die Figuren 3a bis 3d zeigen die Eingriffsmittel 6 im Sperrzustand und die Figuren 4a bis 4d zeigen die Eingriffsmittel 6 im Freigabezustand. Das Lagerbedienfahrzeug ist dazu ausgebildet, ausgehend von der Bedienebene die Eingriffsmittel 6 zwischen dem Sperrzustand und dem Freigabezustand zu verlagern. Durch die Möglichkeit die Eingriffsmittel 6 zwischen dem Freigabezustand und dem Sperrzustand von der Bedienebene aus zu verlagern, kann das Lagerhilfsmittel 4 in verschiedenen Lagerpositionen innerhalb des Lagervolumens 5 befestigt werden, wodurch ein Abstand A zwischen zwei in einem Regal 2 vertikal aufeinanderfolgenden Lagerhilfsmitteln 4 an den Platzbedarf des jeweiligen auf dem Lagerhilfsmittel 4 gelagerten Objekts 8 angepasst werden kann. Hierdurch wird die Raumausnutzung innerhalb des Lagersystems 1 wesentlich verbessert.

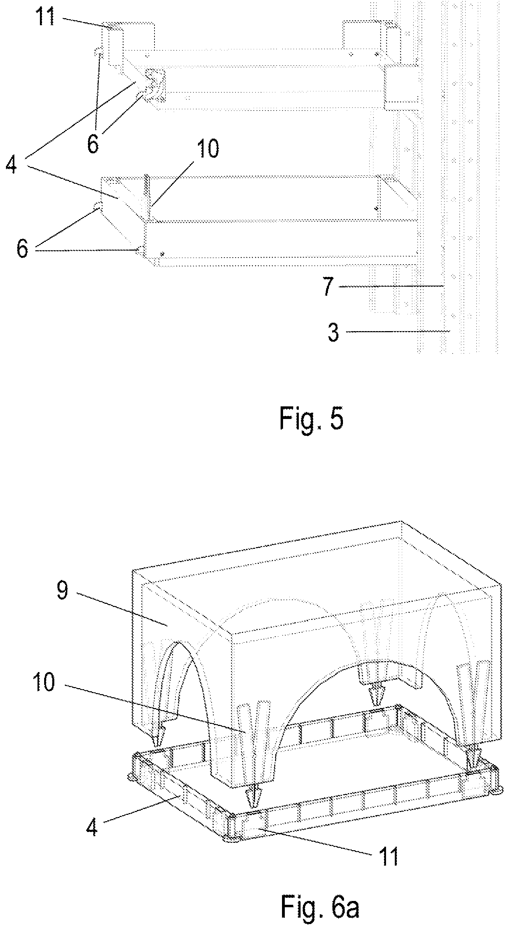

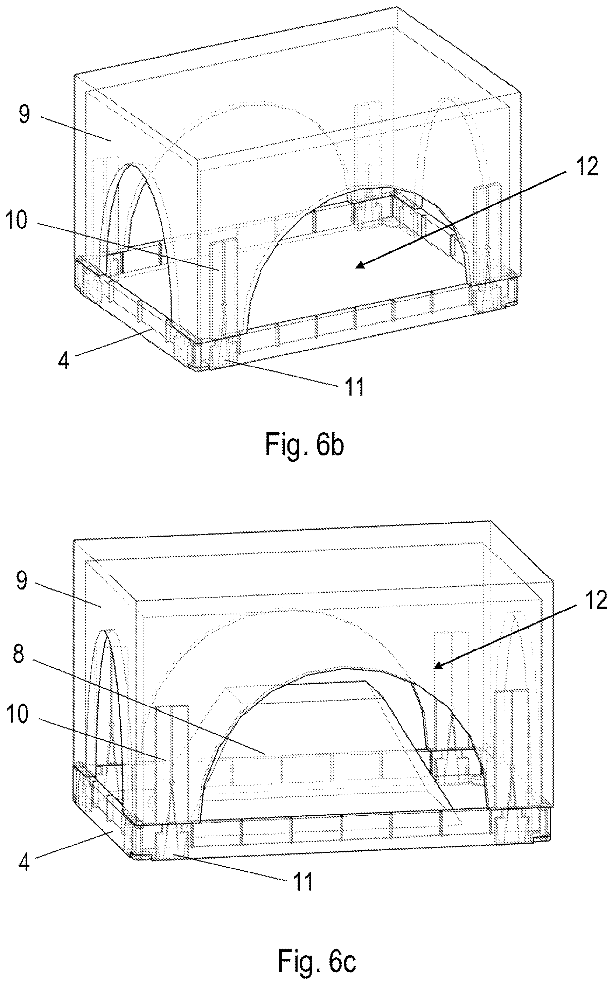

Erfindungsgemäß weist das Lagerbedienfahrzeug ein Lastaufnahmemittel 9 auf, welches im Wesentlichen vertikal in dem Lagervolumen 5 verfahrbar, und mit einem der Lagerhilfsmittel 4 zum Einbringen und zum Ausbringen des Lagerhilfsmittels 4 aus dem Lagervolumen 5, koppelbar ist. Ein derartiges Lastaufnahmemittel 9 ist in den Figuren 6a bis 6c dargestellt. Dieses Lastaufnahmemittel 9 wird von dem nicht dargestellten Lagerbedienfahrzeug von der Bedienebene aus in das Lagervolumen 5 abgesenkt. Hierbei ist entweder bereits ein Lagerhilfsmittel 4 mit dem Lastaufnahmemittel 9 gekoppelt, wie dies in den Figuren 6b und 6c ersichtlich ist, oder das Lastaufnahmemittel 9 ist noch nicht belegt, und wird erst bei Erreichen einer Lagerposition mit einem dort befindlichen Lagerhilfsmittel 4 gekoppelt. Beispielsweise kann das Lagerbedienfahrzeug das Lastaufnahmemittel 9 mit einem nicht in den Figuren dargestellten Kabelzug in das Lagervolumen 5 absenken. Hierdurch wird der Vorteil erreicht, dass das Lagerbedienfahrzeug selbst nicht in das Lagervolumen 5 eintreten muss, und ein rasches Einbringen in und ein Ausbringen des Lagerhilfsmittels 4 aus dem Lagervolumen 5 erreicht werden kann. Wie in den Figuren 6a bis 6c ersichtlich kann eine Kopplung des Lastaufnahmemittels 9 mit dem Lagerhilfsmittel 4 durch ein Rückhaltemittel 10 beispielsweise in Scherenform erreicht werden, wobei das Rückhaltemittel 10 im Zuge der Absenkung des Lastaufnahmemittels 9 auf das Lagerhilfsmittel 4 in entsprechende Ausnehmungen oder Schlitze 11 in dem Lagerhilfsmittel 4 eingreift. Auf diese Weise wird eine automatische Koppelung des Lastaufnahmemittels 9 mit dem Lagerhilfsmittel 4 erreicht, sobald das Lastaufnahmemittel 9 auf das Lagerhilfsmittel 4 abgesenkt wurde. Erfindungsgemäß ist das Lastaufnahmemittel 9 dazu ausgebildet ist, die Eingriffsmittel 6, im Zuge der Koppelung mit dem Lagerhilfsmittel 4, von dem Sperrzustand in den Freigabezustand zu verlagern und/oder im Zuge der Entkoppelung von dem Lagerhilfsmittel 4 von dem Freigabezustand in den Sperrzustand zu verlagern. Dies kann beispielsweise mittels eines mechanischen Klappmechanismus oder Drehmechanismus erreicht werden, welcher in den Figuren nicht gesondert dargestellt ist. Hierdurch wird vermieden, dass die Eingriffsmittel 6 des Lastaufnahmemittels 4 im Sperrzustand verbleiben, sobald eine Kopplung mit dem Lastaufnahmemittel 9 erfolgt ist. Wie in Figur 6c ersichtlich ist, kann das Lastaufnahmemittel 9 einen Aufnahmeraum 12 aufweisen, welcher an eine maximale Dimension des Lagerbedienfahrzeugs angepasst ist. Alternativ kann das Lastaufnahmemittel 9 auch nach oben offen ausgestaltet sein, sodass eine Hohe des auf dem Lastaufnahmemittel 9 gelagerten oder zu lagernden Objekts 8 nicht begrenzt wird.

Die Aufnahmemittel 7 der Regalstützen 3, in welche die Eingriffsmittel 6 des Lagerhilfsmittels 4 im Sperrzustand eingreifen, sind vorzugsweise als in den Regalstützen 3 vorgesehene Ausnehmungen, Vertiefungen oder Sicken ausgeführt. Beispielsweise in den Figuren 3d und 4d ist eine Ausführungsvariante dargestellt, in welche die Aufnahmemittel 7 als Schlitze ausgeführt sind. Dies vereinfacht die Herstellung der Regalstützen 3, wodurch die Gesamtkosten des Lagersystems 1 geringgehalten werden können. Die Eingriffsmittel 6 können im Gegenzug beispielsweise als Haken, Bolzen oder an einer Welle angeordnete Segmentscheiben ausgeführt sein. In der in den Figuren 3a bis 4d dargestellten Ausführungsvariante des erfindungsgemäßen Lagersystems 1 sind die Eingriffsmittel 6 als Segmentscheiben ausgeführt. Dies ermöglicht eine besonders belastbare, aber auch einfach manipulierbare Konstruktion der Eingriffsmittel 6 und der Aufnahmemittel 7. Zudem können die Eingriffsmittel 6 vorzugsweise mittels einer in den Figuren nicht dargestellten Feder in dem Sperrzustand und/oder dem Freigabezustand vorgespannt sein. Hierdurch kann das Risiko von Fehlbedienungen vermieden werden. In Figur 5 ist eine alternative Ausführungsvariante der Eingriffsmittel 6 gezeigt, in welcher die Eingriffsmittel 6 als Haken ausgebildet sind. Beispielsweise kann in dieser Ausführungsvariante kann durch ein einfaches Anheben des Lagerhilfsmittels 4 ein Lösen der Eingriffsmittel 6 aus dem Sperrzustand erreicht werden. Hierbei ziehen sich die Haken in einen Raum in dem Lagerhilfsmittel 3 zurück.

In dem erfindungsgemäßen Lagersystem 1 greifen die Eingriffsmittel 6 eines der Lagerhilfsmittel 4 im Sperrzustand vorzugsweise in, in einer Ebene gegenüberliegende Aufnahmemittel 7 mehrerer Regalstützen 3 ein. Wie in den Figuren ersichtlich können beispielsweise Lagerhilfsmittel 4 mit einem viereckigen Grundriss vorgesehen sein, wobei in jedem Eck ein Eingriffsmittel 6 vorgesehen ist. Hierdurch wird eine besonders stabile Befestigung des Lagerhilfsmittels 4 im Sperrzustand erreicht, und eine hohe Tragefähigkeit gewährleistet.

Die Lagerhilfsmittel 4 sind vorzugsweise stapelbar. In Figur 2 ist beispielhaft gezeigt, wie mehrere Lagerhilfsmittel 4 übereinander an einer Lagerposition in dem Lagervolumen 5 gelagert werden können. Diese gestapelten Lagerhilfsmittel 4 bilden somit ein Objekt 8 welches in dem Lagersystem 1 auf einem untersten Lagerhilfsmittel 4 gelagert wird. Hierbei werden nur die Eingriffsmittel 6 des untersten Lagerhilfsmittels 4 in den Sperrzustand versetzt, und die weiteren, das Objekt 8 bildenden Lagerhilfsmittel 4 auf dieses unterste Lagerhilfsmittel 4 aufgelegt. Die Eingriffsmittel 6 der weiteren Lagerhilfsmittel 4 befinden sich hierbei im Freigabezustand. Die Lagerhilfsmittel 4 können aus diesem Stapel wieder entnommen werden, indem angefangen von jenem Lagerhilfsmittel 4, welches der Bedienebene am nächsten liegt, die Lagerhilfsmittel 4 der Reihe nach von oben aus dem Stapel beispielsweise mittels des Lastaufnahmemittels 9 entnommen werden. Dies reduziert den Platzbedarf für die Lagerung der Lagerhilfsmittel 4 wesentlich.

Das erfindungsgemäße Verfahren zur Lagerung von Objekten 8 in dem erfindungsgemäßen Lagersystem 1 umfasst das Ermitteln einer ersten Lagerhöhe H₁ eines in dem Lagersystem einzulagernden ersten Objekts 8. Hierdurch wir der Platzbedarf dieses ersten Objekts 8 bestimmt. Die Bestimmung kann beispielsweise mittels einer Vermessung erfolgen, oder auch in einer Datenbank hinterlegt sein. Des Weiteren wird das erste Objekt 8 auf ein erstes Lagerhilfsmittel 4 ausgewählt aus den Lagerhilfsmitteln 4 des Lagersystems 1 aufgebracht beziehungsweise in dieses eingebracht. Zudem wird das erste Lagerhilfsmittel 4 mit dem Lagerbedienfahrzeug verbunden, in durch dieses in eine erste Lagerposition in dem Lagervolumen 5 eingebracht, während sich die Eingriffsmittel 6 des ersten Lagerhilfsmittels 4 in dem Freigabezustand befinden. Befindet sich das erste Lagerhilfsmittel 4 an der ersten Lagerposition, werden die Eingriffsmittel 6 des ersten Lagerhilfsmittels 4 von dem Freigabezustand in den Sperrzustand verlagert, um das erste Lagerhilfsmittel 4 in der ersten Lagerposition zu fixieren. Danach beziehungsweise gleichzeitig damit wird das erste Lagerhilfsmittel 4 von dem Lagerbedienfahrzeug abgekoppelt. In weiterer Folge wird ein zweites Lagerhilfsmittel 4 ausgewählt aus den Lagerhilfsmitteln 4 des Lagersystems mit dem Lagerbedienfahrzeug gekoppelt, und in eine zweite Lagerposition in dem Lagervolumen 5 durch das Lagerbedienfahrzeug eingebracht, während sich die Eingriffsmittel 6 des zweiten Lagerhilfsmittels 4 in dem Freigabezustand befinden. Die zweite Lagerposition befindet sich in einem vertikalen Abstand A von zumindest der ersten Lagerhöhe H₁ über der ersten Lagerposition. Hierdurch wird der Vorteil erreicht, dass der Abstand A der ersten Lagerposition und der zweiten Lagerposition anhand des Platzbedarfs des ersten Objekts 8 gewählt wird. Dies ermöglicht eine Anpassung der Lagerpositionen an den realen Platzbedarf er in dem erfindungsgemäßen Lagersystem 1 einzulagernden Objekten 8. Hierdurch werden Leerräume in dem Lagervolumen 5 reduziert. Darauffolgend werden die Eingriffsmittel 6 des zweiten Lagerhilfsmittels 4 von dem Freigabezustand in den Sperrzustand verlagert, um das zweite Lagerhilfsmittel in der zweiten Lagerposition zu fixieren, und das zweite Lagerhilfsmittel 4 von dem Lagerbedienfahrzeug abgekoppelt.

Vorzugsweise wird gemäß dem erfindungsgemäßen Verfahren in dem vertikalen Abstand A zwischen der ersten Lagerposition und der zweiten Lagerposition ein Platzbedarf eines in den Figuren nicht dargestellten Feuerlösch- oder Feuerunterdrückungsmittels berücksichtigt. Hierdurch wird sichergestellt, dass im Fall eines Brandes ausreichend Feuerlösch- oder Feuerunterdrückungsmittel in das Lagervolumen 5 eingebracht werden kann und dieses alle eingelagerten Objekte 8 erreichen kann.

Das Verlagern zumindest eines der Eingriffsmittel der Lagerhilfsmittel des Lagersystems 1 zwischen dem Sperrzustand und dem Freigabezustand erfolgt vorzugsweise durch Verdrehen der Eingriffsmittel 6 in einer im Wesentlichen entlang eines Verlaufs der Regalstützen 3 angeordneten Drehachse D. Hierdurch wird eine einfache Bedienbarkeit der Eingriffsmittel 6 gewährleistet. Die Drehachse D ist in den Figuren 3b und 4b ersichtlich. Zum Verdrehen kann beispielsweise wie in diesen Figuren gezeigt, eine mit den in Form einer Segmentscheibe vorliegenden Eingriffsmitteln 5 verbundene Achse vorgesehen sein, welche ein Kopplungselement an einem der Segmentscheibe gegenüberliegenden Ende umfasst.

Das Verlagern zumindest eines der Eingriffsmittel 6 der Lagerhilfsmittel 4 des Lagersystems 1 von dem Sperrzustand in den Freigabezustand kann zudem durch ein Anheben des Lagerhilfsmittels 4 aus der ersten Lagerposition oder der zweiten Lagerposition erfolgen. Dies reduziert die Wahrscheinlichkeit, dass eines der Lagerhilfsmittel 4 in der jeweiligen Lagerposition steckenbleibt und reduziert die Fehleranfälligkeit des erfindungsgemäßen Verfahrens. Das erste Objekt 8 kann ein Lagerhilfsmittel 4, wie in Figur 2 ersichtlich, ein Stapel aus Lagerhilfsmitteln 4 oder ein Artikel sein. Im Allgemeinen kann das erste Objekt 8 ein Artikel oder jegliches Objekt 8 sein, welches mit dem erfindungsgemäßen Verfahren in das Lagersystem 1 eingelagert und/oder aus diesem ausgelagert wird.

Vorzugsweise wird in dem erfindungsgemäßen Verfahren eine zweiten Lagerhöhe H₂ eines in dem Lagersystem einzulagernden zweiten Objekts 8 ermittelt, und das zweite Objekt 7 in oder auf das zweite Lagerhilfsmittel 4 eingebracht beziehungsweise aufgebracht. Hierdurch wird die Lagerhöhe jedes mit dem erfindungsgemäßen Verfahren eingelagerten Objekts 8 erfasst. Wie das erste Objekt 8 kann auch das zweite Objekt 8 ein Lagerhilfsmittel 4, ein Stapel aus Lagerhilfsmitteln 4 oder ein Artikel sein. Im Allgemeinen kann das zweite Objekt 8 ein Artikel oder jegliches Objekt 8 sein, welches mit dem erfindungsgemäßen Verfahren in das Lagersystem 1 eingelagert und/oder aus diesem ausgelagert wird.

## Patentansprüche

1. Lagersystem (1) umfassend zumindest ein Regal (2) mit mehreren auf einem Untergrund aufgestellten, im Wesentlichen vertikal verlaufenden Regalstützen (3), zumindest ein Lagerbedienfahrzeug und zumindest zwei Lagerhilfsmittel (4), wobei das Lagersystem (1) eine, an einem oberen Ende des Regals (2) angeordnete Bedienebene, und ein unterhalb der Bedienebene angeordnetes Lagervolumen (5) umfasst, wobei das Lagerbedienfahrzeug in der Bedienebene verfahrbar angeordnet und dazu ausgebildet ist, die Lagerhilfsmittel (4) in das Lagervolumen (5) einzubringen und aus diesem auszubringen,
wobei jedes der Lagerhilfsmittel (4) Eingriffsmittel (6) aufweist, und die Regalstützen (3) im Lagervolumen (5) angeordnete Aufnahmemittel (7) aufweisen, wobei die Eingriffsmittel (6) zwischen einem Sperrzustand, in welchem die Eingriffsmittel (6) in zumindest manchen der Aufnahmemittel (7) im Wesentlichen fixiert sind, und das jeweilige Lagerhilfsmittel (4) in einer Lagerposition im Lagervolumen (5) halten, und einem Freigabezustand, in welchem die Eingriffsmittel (6) von den Aufnahmemitteln (7) gelöst sind, verlagerbar sind, wobei das Lagerbedienfahrzeug dazu ausgebildet ist, ausgehend von der Bedienebene die Eingriffsmittel (6) zwischen dem Sperrzustand und dem Freigabezustand zu verlagern, wobei das Lagerbedienfahrzeug ein Lastaufnahmemittel (9) aufweist, welches im Wesentlichen vertikal in dem Lagervolumen (5) verfahrbar, und mit einem der Lagerhilfsmittel (4) zum Einbringen und zum Ausbringen des Lagerhilfsmittels (4) aus dem Lagervolumen (5), koppelbar ist,
**dadurch gekennzeichnet, dass**
das Lastaufnahmemittel (9) dazu ausgebildet ist, die Eingriffsmittel (6), im Zuge der Koppelung mit dem Lagerhilfsmittel (4), von dem Sperrzustand in den Freigabezustand zu verlagern und/oder im Zuge der Entkoppelung von dem Lagerhilfsmittel (4) von dem Freigabezustand in den Sperrzustand zu verlagern.

2. Lagersystem (1) gemäß Anspruch 1, **dadurch gekennzeichnet, dass** die Aufnahmemittel (7) als in den Regalstützen (3) vorgesehene Ausnehmungen, Vertiefungen oder Sicken ausgeführt sind.

3. Lagersystem (1) gemäß einem der Ansprüche 1 oder 2, **dadurch gekennzeichnet, dass** die Eingriffsmittel (6) als Haken, Bolzen oder an einer Welle angeordnete Segmentscheiben ausgeführt, und vorzugsweise mittels einer Feder in dem Sperrzustand und/oder dem Freigabezustand vorgespannt sind.

4. Lagersystem (1) gemäß einem der Ansprüche 1 bis 3, **dadurch gekennzeichnet, dass** die Eingriffsmittel (6) eines der Lagerhilfsmittel (4) im Sperrzustand in, in einer Ebene gegenüberliegende Aufnahmemittel (7) mehrerer Regalstützen (3) eingreifen.

5. Lagersystem (1) gemäß einem der Ansprüche 1 bis 4, **dadurch gekennzeichnet, dass** die Lagerhilfsmittel (4) stapelbar sind.

6. Verfahren zur Lagerung von Objekten (8) in einem Lagersystem (1) gemäß einem der Ansprüche 1 bis 5, umfassend die Schritte:
• Ermitteln einer ersten Lagerhöhe (H₁) eines in dem Lagersystem einzulagernden ersten Objekts (8);
• Einbringen oder Aufbringen des ersten Objekts (8) in oder auf ein erstes Lagerhilfsmittel (4) ausgewählt aus den Lagerhilfsmitteln (4) des Lagersystems (1);
• Verbinden des ersten Lagerhilfsmittels (4) mit dem Lagerbedienfahrzeug;
• Einbringen des ersten Lagerhilfsmittels (4) in eine erste Lagerposition in dem Lagervolumen (5) durch das Lagerbedienfahrzeug, während sich die Eingriffsmittel (6) des ersten Lagerhilfsmittels (4) in dem Freigabezustand befinden;
• Verlagern der Eingriffsmittel (6) des ersten Lagerhilfsmittels (4) von dem Freigabezustand in den Sperrzustand, um das erste Lagerhilfsmittel (4) in der ersten Lagerposition im Zuge des Abkoppelns des ersten Lagerhilfsmittels (4) von dem Lagerbedienfahrzeug zu fixieren;
• Verbinden eines zweiten Lagerhilfsmittels (4) ausgewählt aus den Lagerhilfsmitteln (4) des Lagersystems (1) mit dem Lagerbedienfahrzeug;
• Einbringen des zweiten Lagerhilfsmittels (4) in eine zweite Lagerposition in dem Lagervolumen (5) durch das Lagerbedienfahrzeug, während sich die Eingriffsmittel (6) des Lagerhilfsmittels (4) in dem Freigabezustand befinden, wobei sich die zweite Lagerposition in einem vertikalen Abstand (A) von zumindest der ersten Lagerhöhe (H₁) über der ersten Lagerposition befindet;
• Verlagern der Eingriffsmittel (6) des zweiten Lagerhilfsmittels (4) von dem Freigabezustand in den Sperrzustand, um das zweite Lagerhilfsmittel (4) in der zweiten Lagerposition im Zuge des Abkoppelns des zweiten Lagerhilfsmittels (4) von dem Lagerbedienfahrzeug zu fixieren.

7. Verfahren gemäß Anspruch 6, **dadurch gekennzeichnet, dass** in dem vertikalen Abstand (A) zwischen der ersten Lagerposition und der zweiten Lagerposition ein Platzbedarf eines Feuerlösch- oder Feuerunterdrückungsmittels berücksichtigt wird.

8. Verfahren gemäß einem der Ansprüche 6 oder 7, **dadurch gekennzeichnet, dass** das Verlagern zumindest eines der Eingriffsmittel (6) der Lagerhilfsmittel (4) des Lagersystems (1) zwischen dem Sperrzustand und dem Freigabezustand durch Verdrehen der Eingriffsmittel (6) in einer im Wesentlichen entlang eines Verlaufs der Regalstützen (3) angeordneten Drehachse (D) erfolgt.

9. Verfahren gemäß einem der Ansprüche 6 bis 8, **dadurch gekennzeichnet, dass** das Verlagern zumindest eines der Eingriffsmittel (6) der Lagerhilfsmittel (4) des Lagersystems (1) von dem Sperrzustand in den Freigabezustand durch ein Anheben des Lagerhilfsmittels (4) aus der ersten Lagerposition oder der zweiten Lagerposition erfolgt.

10. Verfahren gemäß einem der Ansprüche 6 bis 9, **dadurch gekennzeichnet, dass** das erste Objekt (8) ein Lagerhilfsmittel (4), ein Stapel aus Lagerhilfsmitteln (4) oder ein Artikel ist.

11. Verfahren gemäß einem der Ansprüche 6 bis 10, **gekennzeichnet durch** die Schritte:
• Ermitteln einer zweiten Lagerhöhe (H₂) eines in dem Lagersystem (1) einzulagernden zweiten Objekts (8);
• Einbringen oder Aufbringen des zweiten Objekts (8) in oder auf das zweite Lagerhilfsmittel (4).

## Claims

1. A storage system (1) comprising at least one shelf (2) having several essentially vertically extending shelf supports (3) set up on a base, at least one storage operating vehicle and at least two storage aids (4), wherein the storage system (1) comprises an operating level arranged at an upper end of the shelf (2) and a storage volume (5) arranged below the operating level, wherein the storage operating vehicle is arranged such that it can move in the operating level and is configured to introduce the storage aids (4) into the storage volume (5) and to retrieve them from it, wherein each of the storage aids (4) has engagement means (6), and the shelf supports (3) have receiving means (7) arranged in the storage volume (5), wherein the engagement means (6) may be moved between a locking state, in which the engagement means (6) are substantially fixed in at least some of the receiving means (7) and hold the respective storage aid (4) in a storage position in the storage volume (5), and a release state, in which the engagement means (6) are released from the receiving means (7), wherein the storage operating vehicle is configured to move the engagement means (6) between the locking state and the release state starting from the operating level, wherein the storage operating vehicle has a load-receiving means (9), which may be moved essentially vertically in the storage volume (5) and may be coupled to one of the storage aids (4) for introducing and retrieving the storage aid (4) from the storage volume (5), **characterized in that** the load-receiving means (9) is configured to move the engagement means (6), in the course of coupling with the storage aid (4), from the locking state into the release state and/or in the course of decoupling from the storage aid (4) from the release state to the locking state.

2. A storage system (1) according to claim 1, **characterized in that** the receiving means (7) are configured as recesses, depressions or seams provided in the shelf supports (3).

3. A storage system (1) according to any of claims 1 or 2, **characterized in that** the engagement means (6) are configured as hooks, bolts or segment discs arranged on a shaft, and are preferably prestressed by means of a spring in the locking state and/or the release state.

4. A storage system (1) according to any of claims 1 to 3, **characterized in that** the engagement means (6) of one of the storage aids (4) in the locking state engage with receiving means (7) of several shelf supports (3) located opposite one another in a level.

5. A storage system (1) according to any of claims 1 to 4, **characterized in that** the storage aids (4) are stackable.

6. A method for storing objects (8) in a storage system (1) according to any of claims 1 to 5, comprising the steps of:
• determining a first storage height (H₁) of a first object (8) to be stored in the storage system;
• introducing or applying the first object (8) into or onto a first storage aid (4) selected from the storage aids (4) of the storage system (1);
• connecting the first storage aid (4) to the storage operating vehicle;
• introducing the first storage aid (4) into a first storage position in the storage volume (5) by the storage operating vehicle, while the engagement means (6) of the first storage aid (4) are in the release state;
• moving the engagement means (6) of the first storage aid (4) from the release state into the locking state in order to fix the first storage aid (4) in the first storage position upon decoupling the first storage aid (4) from the storage operating vehicle;
• connecting a second storage aid (4) selected from the storage aids (4) of the storage system (1) to the storage operating vehicle;
• introducing the second storage aid (4) into a second storage position in the storage volume (5) by the storage operating vehicle, while the engagement means (6) of the storage aid (4) are in the release state, wherein the second storage position is located at a vertical distance (A) of at least the first storage height (H₁) above the first storage position;
• moving the engagement means (6) of the second storage aid (4) from the release state into the locking state in order to fix the second storage aid (4) in the second storage position upon uncoupling the second storage aid (4) from the storage operating vehicle.

7. A method according to claim 6, **characterized in that** a space requirement of a fire extinguishing or fire suppression means is taken into account in the vertical distance (A) between the first storage position and the second storage position.

8. A method according to any of claims 6 or 7, **characterized in that** the moving of at least one of the engagement means (6) of the storage aids (4) of the storage system (1) between the locking state and the release state is realized by rotating the engagement means (6) in an axis of rotation (D) arranged substantially along a course of the shelf supports (3).

9. A method according to any of claims 6 to 8, **characterized in that** the moving of at least one of the engagement means (6) of the storage aids (4) of the storage system (1) from the locking state into the release state is realized by lifting the storage aid (4) from the first storage position or the second storage position.

10. A method according to any of claims 6 to 9, **characterized in that** the first object (8) is a storage aid (4), a stack of storage aids (4) or an article.

11. A method according to any of claims 6 to 10, **characterized by** the steps of:
• determining a second storage height (H₂) of a second object (8) to be stored in the storage system;
• introducing or applying the second object (8) into or onto the second storage aid (4).

## Revendications

1. Système de stockage (1) comprenant au moins une étagère (2) ayant plusieurs supports d'étagère (3) s'étendant sensiblement verticalement et montés sur un fond, au moins un véhicule de stockage et au moins deux moyens de stockage (4), le système de stockage (1) comprenant un niveau de commande situé à une extrémité supérieure de l'étagère (2) et un volume de stockage (5) situé en dessous du niveau de commande, le véhicule de stockage étant disposé de manière à être déplaçable dans le niveau de commande et étant conçu pour acheminer les moyens de stockage (4) dans le volume de stockage (5) et pour les en extraire,
dans lequel chacun des moyens de stockage (4) comporte des moyens d'engagement (6), et les supports d'étagère (3) comportent des moyens de réception (7) disposés dans le volume de stockage (5), les moyens d'engagement (6) étant déplaçables entre un état de blocage, dans lequel les moyens d'engagement (6) sont sensiblement fixés dans au moins certains des moyens de réception (7) et maintiennent le moyen de stockage respectif (4) en position de stockage dans le volume de stockage (5), et un état de déblocage, dans lequel les moyens d'engagement (6) sont libérés des moyens de réception (7), le véhicule de stockage étant conçu pour déplacer les moyens d'engagement (6) entre l'état de blocage et l'état de déblocage, à partir du niveau de commande, le véhicule de stockage comportant un moyen de préhension de charge (9) qui est déplaçable sensiblement verticalement dans le volume de stockage (5) et qui peut être couplé à l'un des moyens de stockage (4) pour acheminer le moyen de stockage (4) dans le volume de stockage (5) et pour l'en extraire,
**caractérisé en ce que** le moyen de préhension de charge (9) est conçu pour déplacer les moyens d'engagement (6) de l'état de blocage à l'état de déblocage lors du couplage avec le moyen de stockage (4) et/ou pour les déplacer de l'état de déblocage à l'état de blocage lors du découplage du moyen de stockage (4).

2. Système de stockage (1) selon la revendication 1, **caractérisé en ce que** les moyens de réception (7) sont conçus comme des cavités, des l'évidements ou des nervures prévus dans les supports d'étagère (3).

3. Système de stockage (1) selon l'une des revendications 1 ou 2, **caractérisé en ce que** les moyens d'engagement (6) sont conçus comme des crochets, des boulons ou des disques segmentés disposés sur un arbre et sont de préférence précontraints par un ressort à l'état de blocage et/ou à l'état de déblocage.

4. Système de stockage (1) selon l'une des revendications 1 à 3, **caractérisé en ce que** les moyens d'engagement (6) de l'un des moyens de stockage (4) s'engagent, à l'état de blocage, avec les moyens de réception (7) de plusieurs supports d'étagère (3), les moyens de réception étant situés face à face dans un même plan.

5. Système de stockage (1) selon l'une des revendications 1 à 4, **caractérisé en ce que** les moyens de stockage (4) sont empilables.

6. Procédé de stockage d'objets (8) dans un système de stockage (1) selon l'une des revendications 1 à 5, comprenant les étapes suivantes:
• déterminer une première hauteur de stockage (H₁) d'un premier objet (8) à stocker dans le système de stockage;
• acheminer le premier objet (8) dans ou sur un premier moyen de stockage (4) choisi parmi les moyens de stockage (4) du système de stockage (1);
• relier le premier moyen de stockage (4) au véhicule de stockage;
• acheminer le premier moyen de stockage (4) vers une première position de stockage dans le volume de stockage (5) par le véhicule de stockage, les moyens d'engagement (6) du premier moyen de stockage (4) étant dans l'état de déblocage;
• déplacer les moyens d'engagement (6) du premier moyen de stockage (4) de l'état de déblocage à l'état de blocage afin de fixer le premier moyen de stockage (4) dans la première position de stockage lors du découplage du premier moyen de stockage (4) du véhicule de stockage;
• relier un deuxième moyen de stockage (4) choisi parmi les moyens de stockage (4) du système de stockage (1) au véhicule de stockage;
• acheminer le deuxième moyen de stockage (4) vers une deuxième position de stockage dans le volume de stockage (5) par le véhicule de stockage, les moyens d'engagement (6) du moyen de stockage (4) étant dans l'état de déblocage, la deuxième position de stockage étant située à une distance verticale (A) de au moins la première hauteur de stockage (H₁) au-dessus de la première position de stockage;
• déplacer les moyens d'engagement (6) du deuxième moyen de stockage (4) de l'état de déblocage à l'état de blocage afin de fixer le deuxième moyen de stockage (4) dans la deuxième position de stockage lors du découplage du deuxième moyen de stockage (4) du véhicule de stockage.

7. Procédé selon la revendication 6, **caractérisé en ce qu'**un encombrement pour un agent d'extinction ou un agent suppresseur d'incendie est pris en compte dans la distance verticale (A) entre la première position de stockage et la deuxième position de stockage.

8. Procédé selon l'une des revendications 6 ou 7, **caractérisé en ce que** le déplacement d'au moins un des moyens d'engagement (6) des moyens de stockage (4) du système de stockage (1) entre l'état de blocage et l'état de déblocage est effectué par rotation des moyens d'engagement (6) dans un axe de rotation (D) disposé sensiblement le long d'une trajectoire des supports d'étagère (3).

9. Procédé selon l'une des revendications 6 à 8, **caractérisé en ce que** le déplacement d'au moins un des moyens d'engagement (6) des moyens de stockage (4) du système de stockage (1) de l'état de blocage à l'état de déblocage est effectué par levage du moyen de stockage (4) depuis la première position de stockage ou depuis la deuxième position de stockage.

10. Procédé selon l'une des revendications 6 à 9, **caractérisé en ce que** le premier objet (8) est un moyen de stockage (4), une pile de moyens de stockage (4) ou un article.

11. Procédé selon l'une des revendications 6 à 10, **caractérisé par** les étapes suivantes:
• déterminer une deuxième hauteur de stockage (H₂) d'un deuxième objet (8) à stocker dans le système de stockage (1);
• acheminer le deuxième objet (8) dans ou sur le deuxième moyen de stockage (4).
